# EUROPÄISCHE PATENTANMELDUNG

(11) **EP 2 050 715 A1**
(43) Veröffentlichungstag der Anmeldung: **22.04.2009**
(21) Anmeldenummer: 07020254.4
(22) Anmeldetag: 16.10.2007
(51) Int. Cl.: C01B 13/02, B01D 53/22

(54) **Vorrichtung zur Abtrennung von Sauerstoff von einer sauerstoffhaltigen gasförmigen Mischung sowie Verfahren zur Abtrennung von Sauerstoff**

(71) Anmelder: SIEMENS AKTIENGESELLSCHAFT, 80333 München (DE)
(72) Erfinder: Graeber, Carsten, 91056 Erlangen (DE); Zimmermann, Gerhard, Dr., 91315 Höchstadt/Aisch (DE)

(57) **Zusammenfassung**

Die Erfindung betrifft eine Vorrichtung zur Abtrennung von Sauerstoff (3) von einer sauerstoffhaltigen gasförmigen Mischung bei einer Prozesstemperatur, umfassend eine Membraneinheit (1) mit einer Membran (2), eine von der Membraneinheit (1) abzweigende Sauerstoffleitung (5) und eine von der Membraneinheit (1) abzweigende Abluftleitung (7), wobei ein erster Wärmetauscher (6) primärseitig in die Sauerstoffleitung (5) geschaltet ist und sekundärseitig der Membraneinheit (1) vorgeschaltet ist, so dass die dem ersten Wärmetauscher (6) zustellbare sauerstoffhaltige gasförmige Mischung aufheizbar ist und ein zweiter Wärmetauscher (8) primärseitig in die Abluftleitung (7) geschaltet ist und sekundärseitig der Membraneinheit (1) vorgeschaltet ist, so dass die dem zweiten Wärmetauscher (8) zustellbare sauerstoffhaltige gasförmige Mischung aufheizbar ist und ein Endvorwärmer (12) zum Erwärmen der sauerstoffhaltigen gasförmigen Mischung auf Prozesstemperatur vorgeschaltet ist.

## Beschreibung

Vorrichtung zur Abtrennung von Sauerstoff von einer sauerstoffhaltigen gasförmigen Mischung sowie Verfahren zur Abtrennung von Sauerstoff

Die Erfindung betrifft eine Vorrichtung zur Abtrennung von Sauerstoff von einer sauerstoffhaltigen gasförmigen Mischung sowie ein Verfahren zur Abtrennung von Sauerstoff von einer sauerstoffhaltigen gasförmigen Mischung.

Luft kann durch verschiedene Verfahren in ihre Bestandteile (d.h. in erster Linie Stickstoff, Sauerstoff, daneben auch Edelgase) aufgetrennt werden. Die technisch ausgereifte, kryogen arbeitende Luftzerlegung (Tieftemperaturluftzerlegung) zerlegt die Luft in einem mechanisch getriebenen thermodynamischen Prozess in ihre wesentlichen Bestandteile Stickstoff und Sauerstoff und umfasst die Teilschritte Reinigung (u.a. Entfernung von Wasserdampf, Staub und Kohlendioxid), Verdichtung der Luft, Kälteerzeugung durch Drosselentspannung, sowie fraktionierende Destillation bzw., da die Siedepunkte von Sauerstoff und Stickstoff sehr dicht beieinander liegen, Gegenstromdestillation (Rektifikation).

Alternativ zu den kryogenen Luftzerlegungsanlagen sind inzwischen zur Abscheidung von Sauerstoff Aggregate auf Membranbasis vorgeschlagen worden (oxygen transport membrane OTM). Die Membraneffekte - elektrochemisch oder auch durch die Partialdruckdifferenz des Sauerstoffs zwischen der Sauerstoff abgebenden Luftseite (Retentatseite) und der Sauerstoff aufnehmenden Seite (Permeatseite) indiziert - führen zu einer zumindest teilweisen Abscheidung des Sauerstoffs aus der Luft.

Die EP 592809 B1 beschreibt eine solche Membran die Sauerstoff von einer sauerstoffhaltigen gasförmigen Mischung abtrennen kann. Membranbasierte Anordnungen zur Luftzerlegung weisen allerdings den Nachteil auf, dass das Membranaggregat auf einer vergleichsweise hohen Betriebstemperatur im Bereich von 700 °C bis 1000 °C gehalten werden muss (Hochtemperatur-Membranverfahren), damit die Membran ihre Funktion ausführen kann. Es muss demnach Heizenergie dem Membranreaktor permanent zugeführt werden, damit dieser die erforderliche Prozesstemperatur für die Sauerstoffabscheidung aus der Luft aufweist.

Von Air Products and Chemicals ist im Zusammenhang mit der Integration einer solchen Membran in einen IGCC-Prozeß eine Schaltung bekannt, bei der Luft zunächst durch indirekten Wärmetausch mit der abgereicherten Luft und dann durch Verbrennung von Synthesegas "in der Luft" auf Membranbetriebstemperatur gebracht wird. Hierbei wird die Luft in ihrem Sauerstoffgehalt abgereichert und enthält die Verbrennungsprodukte.

Aufgabe der Erfindung ist es daher, eine verbesserte Vorrichtung zur Abtrennung von Sauerstoff von einer sauerstoffhaltigen gasförmigen Mischung sowie ein verbessertes Verfahren zur Abtrennung von Sauerstoff von einer sauerstoffhaltigen gasförmigen Mischung vorzuschlagen.

Diese Aufgabe wird erfindungsgemäß gelöst durch die Merkmale des Patentanspruchs 1 sowie des Patentanspruchs 9.

Weitere vorteilhafte Ausführungsformen sind in den Unteransprüchen genannt.

Die erfinderische Vorrichtung zur Abtrennung von Sauerstoff von einer sauerstoffhaltigen gasförmigen Mischung, üblicherweise Luft, umfasst eine Membraneinheit mit einer Membran, sowie eine zur Membraneinheit hinführende Zuleitung und zwei von der Membraneinheit wegführende Leitungen, wobei die eine Leitung, die Sauerstoffleitung, auf der Permeatseite den abgetrennten Sauerstoff und die andere Leitung, die Abluftleitung, auf der Retentatseite die sauerstoffabgereicherte Luft führt.

Ein erster Wärmetauscher ist primärseitig in die Sauerstoffleitung und sekundärseitig in die Zuleitung geschaltet, so dass die dem ersten Wärmetauscher sekundärseitig zustellbare Luft aufheizbar ist.

Ein zweiter Wärmetauscher ist primärseitig in die Abluftleitung und sekundärseitig ebenfalls in die Zuleitung geschaltet, so dass die dem zweiten Wärmetauscher sekundärseitig zustellbare Luft aufheizbar ist.

In einer bevorzugten Ausführungsform sind erster und zweiter Wärmetauscher parallel geschaltet. Die Zuleitungen, in die die Wärmetauscher sekundärseitig geschaltet sind, sind dann Teilzuleitungen, die hinter den Wärmetauschern zu einer Zuleitung zusammengeführt sind.

Ein Endvorwärmer ist so in die Zuleitung geschaltet, dass er dem ersten und zweiten Wärmetauscher nach- und der Membraneinheit vorgeschaltet ist.

Aufgrund des einfachen Betriebskonzepts, des geringen Aufwands und der Vermeidung direkter Emissionen ist der Endvorwärmer eine elektrische Beheizung.

In einer anderen, vorteilhaften Ausführung ist der Endvorwärmer ein primärseitig in den Abgasstrom einer mit fossilen Brennstoffen betriebenen Feuerung geschalteter Wärmetauscher der sekundärseitig in die Zuleitung geschaltet ist. Dies ist besonders dann vorteilhaft, wenn die Sauerstoffabtrennungsanlage mit weiteren, wärmeverbrauchenden Prozessen verbunden ist.

Alternativ kann aber auch ein Brenner als Endvorwärmer in die Zuleitung geschaltet sein. Der Vorteil einer direkten Verbrennung im Luftstrom, neben dem einfachen Betriebskonzept, ist die hohe Effizienz durch direkte Wärmerückgewinnung für die Endvorwärmung.

Die neben erhöhtem Druck für den effizienten Betrieb einer Sauerstoffabtrennungsanlage auf Basis einer Oxygen Transport Membran erforderlichen hohen Temperaturen, die Prozess- bzw. Membranbetriebstemperatur liegt zwischen 700 °C und 1000°C, werden im erfinderischen Verfahren zur Abtrennung von Sauerstoff von einer sauerstoffhaltigen gasförmigen Mischung, beispielsweise Luft, überwiegend durch indirekten Wärmetausch der eingesetzten Luft gegenüber den heißen Produktströmen Sauerstoff und abgereicherte Luft erreicht. Nachdem die Luft beispielsweise im Verdichter einer Gasturbinenanlage auf den Betriebsdruck der Membraneinheit, sinnvollerweise ohne Zwischenkühlung, verdichtet wurde, erfolgt die weitere Erhitzung der Luft auf nahezu Prozesstemperatur in zwei parallel geschalteten, indirekten Gas/Gas-Wärmetauschern gegenüber den Produktströmen der Sauerstoffabtrennungsanlage, Sauerstoff und abgereichte Luft.

Je nach angenommener Grädigkeit der Gas/Gas-Wärmetauscher lässt sich damit eine Temperatur von beispielsweise 20 K unterhalb der Prozesstemperatur erreichen. Typische Werte liegen zwischen 10 K und 50 K.

Zur weiteren, nur noch geringen Endvorwärmung des Gesamtluftstromes auf Prozesstemperatur wird dann die auf nahezu Prozesstemperatur aufgeheizte Luft entweder elektrisch oder durch indirekten Wärmetausch gegenüber dem Abgas aus einer mit fossilen Brennstoffen betriebenen Feuerung, wobei das Abgas zunächst zum Beispiel zur Dampferzeugung und dann im entsprechenden Temperaturbereich zur Lufterwärmung verwendet wird und dann weiter zum Beispiel zur Dampfüberhitzung und Wasservorwärmung eingesetzt wird, oder durch direkte Verbrennung im Luftstrom weiter aufgeheizt.

Die Erfindung wird anhand von Ausführungsbeispielen näher erläutert, die in den Zeichnungen dargestellt sind.

### Es zeigen:

Fig. 1 ein erstes Ausführungsbeispiel der erfinderischen Vorrichtung zur Abtrennung von Sauerstoff von einer sauerstoffhaltigen gasförmigen Mischung mit einer elektrischen Beheizung als Endvorwärmer

Fig. 2 ein zweites Ausführungsbeispiel der erfinderischen Vorrichtung zur Abtrennung von Sauerstoff von einer sauerstoffhaltigen gasförmigen Mischung mit einem indirekten Wärmetausch gegenüber dem Abgas aus einer mit fossilen Brennstoffen betriebenen Feuerung als Endvorwärmer und

Fig. 3 ein drittes Ausführungsbeispiel der erfinderischen Vorrichtung zur Abtrennung von Sauerstoff von einer sauerstoffhaltigen gasförmigen Mischung mit einem Brenner als Endvorwärmer.

Im Wesentlichen gleich bleibende Merkmale werden grundsätzlich mit den gleichen Bezugszeichen beziffert.

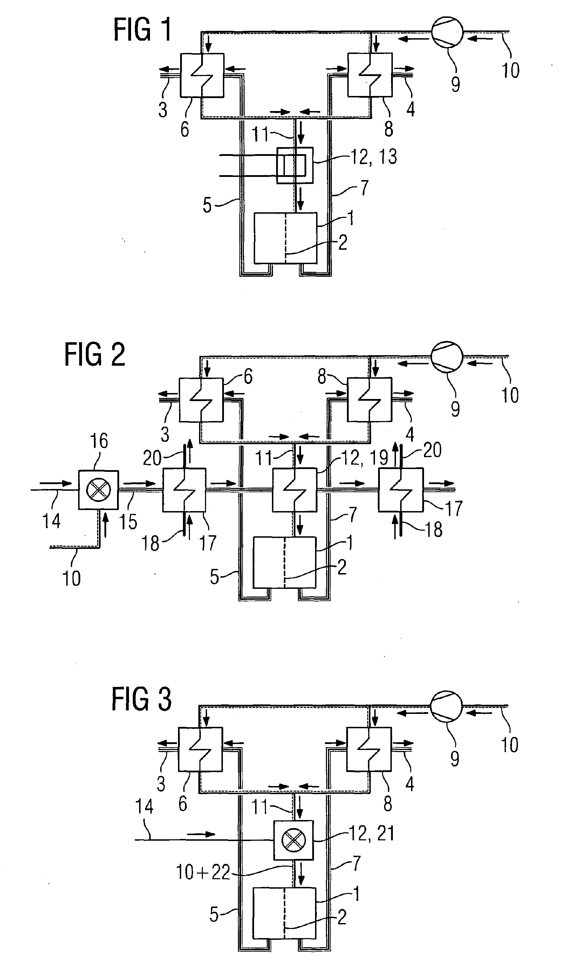

Die Figur 1 zeigt die erfinderische Vorrichtung zur Abtrennung von Sauerstoff 3 von einer sauerstoffhaltigen gasförmigen Mischung.

Die Vorrichtung umfasst eine Membraneinheit 1 mit einer Membran 2 mit der bei einer Prozesstemperatur aus einer sauerstoffhaltigen gasförmigen Mischung, beispielsweise Luft 10, Sauerstoff 3 abgetrennt wird.

Die Luft 10 wird über eine Zuleitung 11 der Membran 2 zugeführt. Die Produktströme Sauerstoff 3 und sauerstoffabgereicherte Luft 4 werden über eine Sauerstoffleitung 5 bzw. eine Abluftleitung 7 von der Membraneinheit 1 weggeführt.

Der Sauerstoff 3 wird über die Sauerstoffleitung 5 einem ersten Wärmetauscher 6 und die sauerstoffabgereicherte Luft 4 über die Abluftleitung 7 einem zweiten Wärmetauscher 8 zugeführt.

Durch den indirekten Wärmetausch mit den heißen Produktströmen Sauerstoff 3 und sauerstoffabgereicherte Luft 4 wird die eingesetzte, mittels eines optionalen Druckerhöhers 9 komprimierte Luft 10 auf eine Temperatur erhitzt, die nur wenig unter der erforderlichen Prozesstemperatur von 700°C bis 1000°C liegt.

Die weitere, nur noch geringe Endvorwärmung zum Erreichen der Prozesstemperatur erfolgt mit einem in die Zuleitung 11 geschalteten Endvorwärmer 12.

In Figur 1 ist der Endvorwärmer 12 eine elektrische Beheizung 13. Nach Durchlaufen des Endvorwärmers 12 kann die Luft 10 temperaturrichtig der Membraneinheit 1 zugeführt werden.

Figur 2 zeigt als Ausführungsbeispiel der erfinderischen Vorrichtung zur Abtrennung von Sauerstoff 3 von einer sauerstoffhaltigen gasförmigen Mischung, beispielsweise Luft 10, einen Endvorwärmer 12, der durch indirekten Wärmetausch gegenüber dem Abgas aus einer mit fossilen Brennstoffen 14 betriebenen Feuerung die Luft 10 auf Prozesstemperatur, also Betriebstemperatur der Membran 2 bringt. Hierzu wird ein Brennstoff 14 mit Luft zu Rauchgas 15 in einem Brenner 16 verbrannt. Das Rauchgas 15 durchströmt primärseitig einen Rauchgas/Dampf-Wärmetauscher 17 der sekundärseitig in eine Dampfleitung 18 geschaltet ist. Das so abgekühlte Rauchgas 15 wird temperaturrichtig primärseitig durch den dritten Wärmetauscher 19 geleitet, der sekundärseitig in die Zuleitung 11 geschaltet ist, wodurch die Luft 10, deren Temperatur sich nur geringfügig unterhalb der Prozesstemperatur, also der Betriebstemperatur der Membran 2 befindet, auf Prozesstemperatur erhitzt wird. Das dadurch nur geringfügig weiter abgekühlte Rauchgas 15 kann in einem weiteren Rauchgas/Dampf-Wärmetauscher 17 zur Produktion bzw. Überhitzung von Dampf 20 weiterverwendet werden.

Figur 3 zeigt eine Ausführungsform der Vorrichtung zur Abtrennung von Sauerstoff 3 von einer sauerstoffhaltigen gasförmigen Mischung, beispielsweise Luft 10, bei der die durch die heißen Produktströme Sauerstoff 3 und sauerstoffabgereicherte Luft 4 aufgeheizte Luft 10 durch direkte Verbrennung im Luftstrom auf Prozesstemperatur gebracht wird.

Hierzu wird, dem ersten und zweiten Wärmetauscher nachgeschaltet und der Membraneinheit 1 vorgeschaltet, in die Zuleitung 11 ein Brenner 21 geschaltet.

Da die Erwärmung der Luft 10 überwiegend durch indirekten Wärmetausch der eingesetzten Luft 10 mit den Produktströmen Sauerstoff 3 und sauerstoffabgereicherte Luft 4 erfolgt und die Endvorwärmung lediglich eine nur geringe, weitere Temperaturerhöhung bewirken soll, werden die mit dieser Art der Endvorwärmung einhergehende Sauerstoffabreicherung der Luft 10 und die Menge der entstehenden Verbrennungsprodukte 22 möglichst gering gehalten.

## Patentansprüche

1. Vorrichtung zur Abtrennung von Sauerstoff (3) von einer sauerstoffhaltigen gasförmigen Mischung bei einer Prozesstemperatur, umfassend eine Membraneinheit (1) mit einer Membran (2), eine zur Membraneinheit führende Zuleitung (11), eine von der Membraneinheit (1) abzweigende Sauerstoffleitung (5) und eine von der Membraneinheit (1) abzweigende Abluftleitung (7),
**dadurch gekennzeichnet, dass** ein erster Wärmetauscher (6) primärseitig in die Sauerstoffleitung (5) und sekundärseitig in die Zuleitung (11) geschaltet ist, so dass die dem ersten Wärmetauscher (6) zustellbare sauerstoffhaltige gasförmige Mischung aufheizbar und der Membraneinheit zuführbar ist und ein zweiter Wärmetauscher (8) primärseitig in die Abluftleitung (7) und sekundärseitig in die Zuleitung (11) geschaltet ist, so dass die dem zweiten Wärmetauscher (8) zustellbare sauerstoffhaltige gasförmige Mischung aufheizbar und der Membraneinheit (1) zuführbar ist und ein Endvorwärmer (12) zum Erwärmen der sauerstoffhaltigen gasförmigen Mischung auf Prozesstemperatur in die Zuleitung (11) geschaltet ist.

2. Die Vorrichtung nach Anspruch 1, bei der der erste und der zweite Wärmetauscher (6,8) parallel geschaltet sind.

3. Die Vorrichtung nach Anspruch 1 oder 2, bei der der Endvorwärmer (12) dem ersten und zweiten Wärmetauscher (6,8) nachgeschaltet ist.

4. Die Vorrichtung nach einem der Ansprüche 1 bis 3, bei der die Temperatur der der Membraneinheit (1) zustellbaren sauerstoffhaltigen gasförmigen Mischung durch den Endvorwärmer (12) um 10 K bis 50 K, vorzugsweise um 20 K anhebbar ist.

5. Die Vorrichtung nach einem der vorhergehenden Ansprüche, bei der der Endvorwärmer (12) eine elektrische Beheizung (13) ist.

6. Die Vorrichtung nach einem der Ansprüche 1 bis 4, bei der der Endvorwärmer (12) ein dritter Wärmetauscher (19) ist, der primärseitig in den Abgasstrom aus einer mit fossilen Brennstoffen (14) betriebenen Feuerung geschaltet ist und sekundärseitig der Membraneinheit (1) vorgeschaltet ist, so dass die dem dritten Wärmetauscher zustellbare sauerstoffhaltige gasförmige Mischung auf Prozesstemperatur aufheizbar ist.

7. Die Vorrichtung nach einem der Ansprüche 1 bis 4, bei der der Endvorwärmer (12) ein Brenner (16) ist.

8. Die Vorrichtung nach einem der vorhergehenden Ansprüche, bei der die sauerstoffhaltige gasförmige Mischung Luft (10) ist.

9. Verfahren zum Betrieb einer Membraneinheit (1) zur Sauerstoffabtrennung bei dem Sauerstoff (3) bei einer Prozesstemperatur mittels einer Membran (2) von einer sauerstoffhaltigen gasförmigen Mischung abgetrennt wird, wobei eine sauerstoffabgereicherte gasförmige Mischung gebildet wird und zur Aufrechterhaltung der erforderlichen Prozesstemperatur der Membran (2) Heizenergie zugeführt wird,
**dadurch gekennzeichnet, dass** die Heizenergie zu einem Teil aus dem Sauerstoff (3) und der sauerstoffabgereicherten gasförmigen Mischung in einem Wärmetausch mit der sauerstoffhaltigen gasförmigen Mischung gewonnen wird, und die so auf nahezu Prozesstemperatur aufgeheizte sauerstoffhaltige gasförmige Mischung weiter auf Prozesstemperatur erhitzt wird und der Membran (2) zugeführt wird.

10. Verfahren nach Anspruch 9, bei dem der Wärmetausch zwischen Sauerstoff und sauerstoffhaltiger gasförmiger Mischung und der Wärmetausch zwischen sauerstoffabgereicherter gasförmiger Mischung und sauerstoffhaltiger gasförmiger Mischung parallel geschaltet werden.

11. Verfahren nach Anspruch 9 oder 10, bei dem die auf nahezu Prozesstemperatur aufgeheizte sauerstoffhaltige gasförmige Mischung elektrisch beheizt und auf Prozesstemperatur erhitzt wird.

12. Verfahren nach Anspruch 9 oder 10, wobei die auf nahezu Prozesstemperatur aufgeheizte sauerstoffhaltige gasförmige Mischung in einem Wärmetausch mit dem Abgas aus einer mit fossilen Brennstoffen (14) betriebenen Feuerung auf Prozesstemperatur erhitzt wird.

13. Verfahren nach Anspruch 9 oder 10, wobei die auf nahezu Prozesstemperatur aufgeheizte sauerstoffhaltige gasförmige Mischung durch direkte Verbrennung im Strom der gasförmigen Mischung auf Prozesstemperatur erhitzt wird.

14. Verfahren nach einem der Ansprüche 9 bis 13, wobei die sauerstoffhaltige gasförmige Mischung Luft (10) ist.
